(19) **Europäisches Patentamt / European Patent Office / Office européen des brevets**

(11) **EP 3 933 800 B1**

(12) **EUROPEAN PATENT SPECIFICATION**

(45) Date of publication and mention
of the grant of the patent:
**24.07.2024 Bulletin 2024/30**

(21) Application number: **21182822.3**

(22) Date of filing: **30.06.2021**

(51) International Patent Classification (IPC):
**G08G 1/005** $^{(2006.01)}$ **G08G 1/095** $^{(2006.01)}$

(52) Cooperative Patent Classification (CPC):
**G08G 1/08; G08G 1/095**

(54) **SIGNAL DEVICE FOR A PEDESTRIAN OR BICYCLE CROSSING**

SIGNALVORRICHTUNG FÜR EINEN FUSSGÄNGER- ODER FAHRRADÜBERGANG

DISPOSITIF DE SIGNALISATION D'UN PASSAGE POUR PIÉTONS OU CYCLISTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2020 SE 2050825**

(43) Date of publication of application:
**05.01.2022 Bulletin 2022/01**

(73) Proprietor: **PrismaTibro AB**
**543 50 Tibro (SE)**

(72) Inventors:
• **BRANDQVIST, Roland**
  **546 95 Karlsborg (SE)**
• **WARNICKE, Niklas**
  **531 52 LIDKÖPING (SE)**

(74) Representative: **AWA Sweden AB**
**P.O. Box 11394**
**404 28 Göteborg (SE)**

(56) References cited:
**GB-A- 2 453 369**

• **"Traffic Detector Handbook: Third Edition—Volume I", 1 October 2006 (2006-10-01), US, XP055219257, Retrieved from the Internet <URL:https://www.fhwa.dot.gov/publications/research/operations/its/06108/06108.pdf> [retrieved on 20151008]**
• **WITOLD CZAJEWSKI: "Innovative solutions for improving safety at pedestrian crossings", 1 May 2013 (2013-05-01), XP002804804, Retrieved from the Internet <URL:https://www.researchgate.net/publication/237010081> [retrieved on 20211118]**

**Description**

<u>Technical field</u>

The present invention relates to a signal device for a pedestrian or bicycle crossing. The present invention also relates to a traffic system comprising such a signal device, and to a method.

<u>Background</u>

In conventional signal devices for pedestrian or bicycle crossings, pedestrians make a demand to cross the street by physically pressing the front panel of the pedestrian signal.

An alternative solution is disclosed in GB2561653 (A), wherein a push button box includes a pedestrian operable input device that may be operated by the pedestrian to demand that the crossing changes to allow them to safely cross. The device could be a non-contact switching device such as a radar apparatus that detects when a pedestrian or other user moves into the field of view of the radar and interprets the presence of a pedestrian or other user as an indication that they wish to use the crossing. Document "Traffic Detector Handbook: Third Edition-Volume I",, 1 October 2006 (2006-10-01), XP055219257,US Retrieved from the Internet:URL:https://www.fhwa.dot.gov/publications/ research/operations/its/06108/06108.pdf [retrieved on 2015-10-08] discusses the development of intelligent crosswalk systems that employ sensor fusion and machine learning techniques to distinguish the presence of pedestrians and drivers.

Furthermore, a situation that sometimes occurs is when a pedestrian makes a demand and then leaves the spot before there is a shift to green light. This can for example occur when the pedestrian does not have the patience to wait and chooses to cross the street on red light. Then after a short while, there is a shift to green light for pedestrians at the crossing, and there is red light for vehicles like cars. At this point there might be no pedestrians wanting to cross the street which means that there was an unnecessary interruption of the vehicle/car traffic flow.

To this end, a so-called puffin crossing has a pedestrian kerb detector (PKD) on top of a traffic light. If a pedestrian presses the button but then walks off, the PKD will cancel the request making the lights more efficient.

Despite the above-mentioned solutions, there is still room for an improved signal device for a pedestrian or bicycle crossing.

<u>Summary of the invention</u>

It is an object of the present invention to provide an improved signal device for a pedestrian or bicycle crossing.

According to a first aspect of the present invention, this and other objects is achieved by a signal device for a pedestrian or bicycle crossing as defined in appended claim 1.

The present invention is based on the understanding that both touch-less demand and pedestrian/bicyclist kerbside presence conveniently can be detected by a single radar sensor in the signal device. In this way, there is no need to have a dedicated radar apparatus in the signal device for demand and a dedicated detector on top of a traffic light for pedestrian kerb detection, which may facilitate installation and reduce the visual footprint. Furthermore, the touch-less demand provides a more hygienic solution to users.

The term 'green light' should be construed as not only actual green light of an associated traffic light, but any signal that means "free to cross", such as "walking man", "walk signal", etc. That is, the demand may generally be regarded as a request to cross the street where the crossing is located. In other words, the demand may be a demand for green light of the associated traffic light for pedestrians or bicyclists at the crossing. The term 'pedestrian or bicyclist kerbside presence' is intended to cover also presence of a pedestrian or bicyclist at a refuge island. The term 'demand cancellation' may be construed as a signal or pulse or the like issued by the signal device for (requesting) cancellation of a demand for green light, for example said issued demand for green light. The demand cancellation may lead to that the associated traffic light for pedestrians or bicyclists does not turn green, and consequently a traffic light for vehicles passing the crossing does not turn red. The demand cancellation may for example be issued to a (superordinate) traffic controller device and/or any other signal device(s) e.g. on the opposite side of the crossing, at a refuge island associated with the crossing, at another related crossing in conjunction with an intersection or road junction, etc.

The first detection range has a proximal end in the interval of 1 to 5 cm distance from the radar sensor and a distal end in the interval of 6 to 20 cm distance from the radar sensor, wherein the second detection range has a distal end in the interval of 1.5 to 3 m distance from the radar sensor. Hence, the first detection range could be 2 cm to 8 cm, while the second detection range could be 8 cm to 2.5 m, for example.

The radar sensor may have a first measurement service for short range measurement and a second measurement service for long range measurement, wherein the radar sensor is configured, or instructed by the computer device, to repeatedly switch between the first measurement service for detecting the touch-less demand for green light and the second measurement service for detecting the pedestrian or bicyclist kerbside presence. This may ensure that the signal device accurately can detect touch-less demand in the first (usually much smaller and closer) detection range, and also perform good enough detection of presence in the second (usually much larger) detection range. The measurement services of the radar sensor may for example be switched ten times per second.

The radar sensor may in the second measurement service return a length value corresponding to a distance from the radar sensor to an object. The radar sensor may in the first measurement service return amplitude values corresponding to the signal strength of reflected radar pulses in the first detection range, wherein the computer device is configured to analyse the returned amplitude values to find a peak and to determine that an object is detected in the first detection range if the found peak exceeds a predetermined threshold. The predetermined threshold may for example be about 120% of a base level.

The radar sensor is adapted to detect touch-less demand for green light and pedestrian or bicyclist kerbside presence in substantially the same direction. The radar sensor is aimed in a (substantially) horizontal direction (substantially) parallel to the kerb at the pedestrian or bicycle crossing.

The computer device is configured to cause the signal device to issue a demand for green light if the radar sensor detects an object, for example a hand of a pedestrian or bicyclist, in the first detection range for a first predetermined time. That is, the pedestrian or bicyclist has to hold the hand within the (close) first detection range from the radar sensor for a certain time to issue a demand. In this way, false demands if something inadvertently and very quickly passes by in the first detection range may be avoided. The first predetermined time may for example have a duration set in the range of 0.1-1 s, such as 0.1 s. The first predetermined time may also be referred to as 'activation time'.

The computer device is configured to cause the signal device to issue the demand cancellation a second predetermined time after the radar sensor stops detecting any object in the second detection range. That is, a person (pedestrian or bicyclist) could very briefly leave the second detection range without the demand being cancelled prematurely. This is also advantageous should the person wear low-reflecting clothes that could cause the radar sensor to temporarily stop detecting the person although he or she is still in the second detection range. The second predetermined time may for example have a duration set in the range of 2-23 s.

The signal device may further comprise pedestrian or bicyclist notification means, wherein the second predetermined time includes a detection timeout period and a subsequent notification timeout period, and wherein the computer device is configured to activate the pedestrian or bicyclist notification means during the notification timeout period after the detection timeout period to notify a pedestrian or bicyclist that a demand will be cancelled unless the pedestrian or bicyclist re-enters the second detection range. In this way, a person can conveniently be notified/warned that the demand is about to be cancelled, giving the person the opportunity to return closer to the signal device if they still want to cross the street on green light. The pedestrian or bicyclist notification means may for example include a(n LED) light source which e.g. may emit flashing light when activated, and/or a loudspeaker which plays an information sound and/or a voice message when activated. The detection timeout period may for example have a duration set in the range of 1-8 s, such as 1 s. The notification timeout period may for example have a duration set in the range of 1-15 s, such as 5 s. The detection timeout period may be shorter than the notification timeout period.

Furthermore, the computer device may be configured to cause the signal device to automatically issue a demand for green light if the signal device receives a demand cancellation originating from another signal device while the radar sensor detects an object in the second detection range. In this way, a person (= the object) does not have to demand green light (again) in case another person that made a demand at the other signal device crosses the street before an associated traffic light turns green.

The signal device may further comprise a first relay output and a second relay output, wherein at least one of the first and second relay outputs is enabled for issuing the demand for green light and the demand cancellation solely when a traffic light associated with the signal device is on red light, and wherein at least one of the first and second relay outputs is enabled for issuing an error report signal solely when the traffic light associated with the signal device is on green light. By this, demand/cancellation signalling do not have to interfere with error signalling signal, which in turn improves the safety of the signal device. If both the demand for green light and the demand cancellation are issued on the first relay output (see below), the error report signal could be issued on the second relay output regardless the phase (green light/red light) of the associated traffic light. The error report signal may be construed as a signal (generally) indicating an error of the signal device. The error report signal may for example be issued/sent to a (superordinate) traffic controller device.

The term 'red light' should be construed as not only actual red light of the associated traffic light, but any signal that means "crossing not allowed", such as "upraised hand" or "wait" or "don't walk" signal, etc.

The demand for green light and the demand cancellation may have different pulse lengths if the signal device is in a pulse signalling mode, wherein the demand for green light is signalled by an active relay output of the signal device and the demand cancellation is signalled by an inactive relay output of the signal device if the signal device is in a level signalling mode. In this way, both demand for green light and the demand cancellation can be safely signalled using one relay output, for example the aforementioned first relay output. This also means that existing signalling hardware (a conventional signal device has two relay outputs, R1 and R2, wherein R1 is normally used for demand request signalling and R2 for error signalling) beneficially can used. The level signalling mode may be construed as a (signalling) mode where a level (=active or inactive relay output) indicates for example demand for green light or demand cancellation. The demand for green light/demand cancellation may for example be signalled to a (superordinate) traffic controller device by the active/inactive relay output when the signal device is in the level signalling mode.

The radar sensor may be a pulsed radar sensor adapted to detect a distance to an object in front of the pulsed radar sensor based on time of flight.

Furthermore, the radar sensor may comprise one transmitter antenna and one receiver antenna. The transmitter antenna may emit a very short electro-magnetic pulse that travels with the speed of light. If an object is present in front of the radar sensor, the pulse will be reflected and bounce back to the radar sensor and be detected by the radar sensor's receiver antenna. By measuring the time between the emission and reception of the pulse, the distance from the radar sensor to the object can be calculated as:

$$distance = (speed\ of\ light\ *\ travel\ time)\ /\ 2.$$

The signal device may further comprise a housing with the computer device and the radar sensor.

Furthermore, the radar sensor may be mounted to a sensor ring or plate arranged between an upper part of the housing and a lower part of the housing. In this way, the radar sensor could easily be incorporated into an existing signal device (construction/design), without having to significantly change the construction and/or design of that signal device. The sensor ring or plate could for example be sandwiched between a top lid or light ring (=upper part) and the lower part of the signal device housing that conventionally hosts a push front.

The signal device may be adapted to issue the demand for green light and the demand cancellation using wireless data communication or wired data communication.

According to a second aspect of the present invention, there is provided a traffic system according to appended claim 13.

According to a third aspect of the present invention, there is provided a method, according to claim 14.

Brief description of the drawings

These and other aspects of the present invention will now be described in more detail, with reference to the appended drawings showing currently preferred embodiments of the invention.

Fig. 1 is a perspective view of a signal device according to one or more embodiments of the present invention.
Fig. 2 is a top view of a sensor ring of the signal device of fig. 1.
Fig. 3 is a schematic top view of a traffic system comprising a signal device according to one or more embodiments of the present invention installed at a pedestrian crossing.
Fig. 4 shows wiring of the traffic system of fig. 3.
Figures 5a-d illustrate time lines of various use cases of the present invention.
Figures 6a-c are screen shots of an app that may be used to configure the present signal device.

Detailed description of the invention

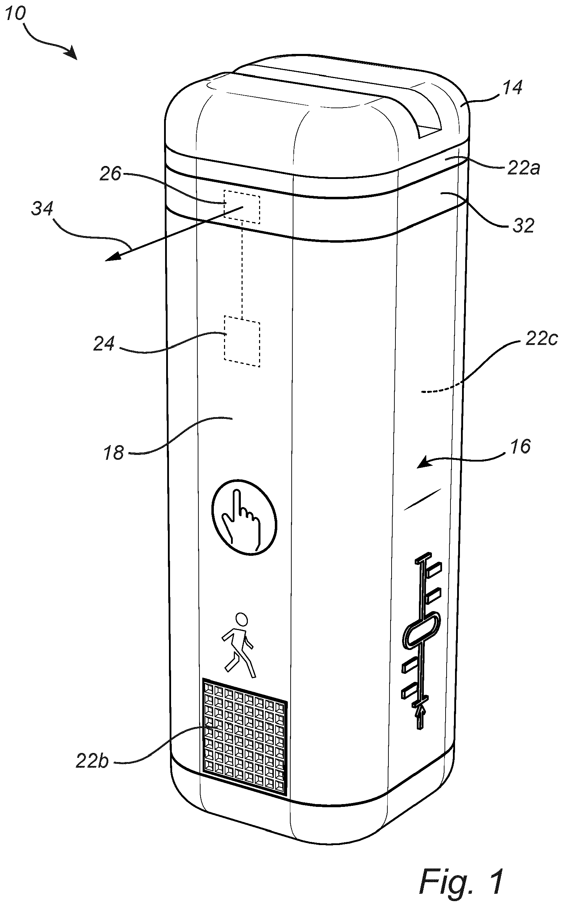

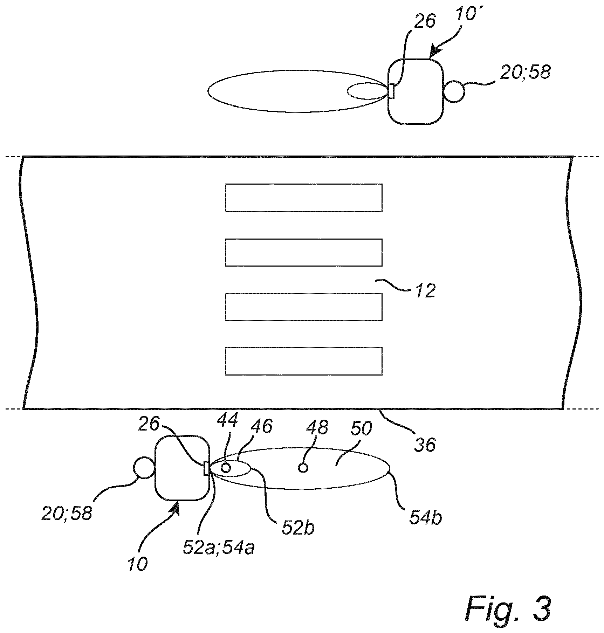

Figures 1 and 3 show a signal device 10 for a pedestrian (or bicycle ) crossing 12 according to one or more embodiments of the present invention.

The signal device 10 may comprise a housing. The housing may substantially have the shape of a rectangular parallelepiped. The housing may comprise a top lid 14 and a lower part 16. The (lower part 16 of the) housing may have a front side 18. In addition to touch-less demand discussed hereinbelow, a demand could be made by pressing the (push) front side 18. The housing may have a concave back side (not shown), to facilitate mounting of the signal device 10 to a (traffic light) pole 20. A light ring 22a may be provided directly below the top lid 14. A front LED 22b may be provided at the front side 18. The signal device 10 may also have a loudspeaker 22c. The light ring 22a, front LED 22b, and loudspeaker 22c may collectively be referred to as pedestrian or bicyclist notification means.

The signal device 10 further comprises a computer device 24. The computer device 24 may be positioned inside the housing. The computer device 24 may include a micro controller (in operation) running a pedestrian signal application. The micro controller of the computer device 24 may be mounted on a (Daps) mother board.

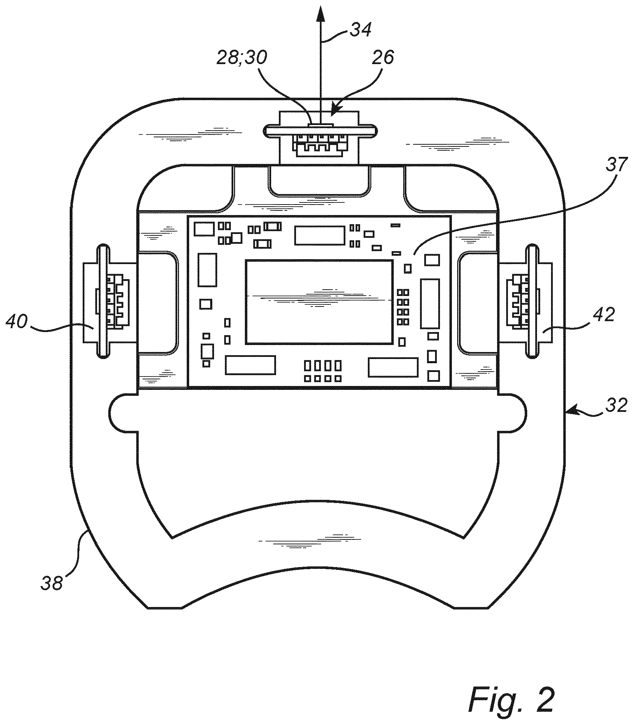

The signal device 10 further comprises a radar sensor 26. The radar sensor 26 may be a pulsed radar sensor generally adapted to detect a distance to an object in front of the pulsed radar sensor 26 based on time of flight. The radar sensor 26 may for example be model A1 from Acconeer AB. With further reference to fig. 2, the radar sensor 26 may comprise one transmitter (Tx) antenna 28 and one receiver (Rx) antenna 30. The transmitter antenna 28 may emit a very short electro-magnetic pulse that travels with the speed of light. If an object is present in front of the radar sensor 28, the pulse will be reflected and bounce back to the radar sensor and be detected by the receiver antenna 30. By measuring the time between the emission and reception of the pulse, the distance from the radar sensor 26 to the object can be calculated as: distance = (speed of light * travel time) / 2.

The radar sensor 26 may be mounted to a sensor ring 32. The sensor ring 32 is here sandwiched between the light ring 22a and the lower part 16 of the housing of the signal device 10. The radar sensor 26 is in fig. 3 mounted to the sensor ring 32 in a position for "straight forward" detection, above the front side 18 of the housing lower part 16. The radar sensor 32 may for example be aimed in a substantially horizontal direction 34 substantially parallel to the kerb 36 at the pedestrian crossing 12. The horizontal view (= horizontal detection angle (HPBW) range) of the radar sensor 26 may be +/-40 deg. The vertical view (= vertical detection angle (HPBW) range) of the radar sensor 26 may be +/- 20 deg.

A board for the radar sensor 26 may be mounted vertically on the sensor ring 32. The radar sensor 26 may detect a distance to an object through an outer (plastic) material of the sensor ring 32. The radar sensor 26 may be connected to the aforementioned micro controller via a (Prisma) radio board 37 also mounted to the sensor ring 32. The (Prisma) radio board 37 may host a system on a chip, which may be regarded as forming part of the computer device 24. The sensor ring 32 may have an outer contour 38, including a concave back portion, which outer contour 38 matches the transversal outer contour of the remaining housing of the signal device 10. The sensor ring 32 could also include a left radar sensor mounting position 40 and a right radar sensor mounting position 42, for allowing detection in a different direction or in at least one additional direction. In the latter case, (the sensor ring 32 of) the signal device 10 could include at least one more radar sensor.

The radar sensor 26 of the present signal device 10 is specifically adapted to detect touch-less demand for green light by detecting an object 44, for example a hand of a pedestrian or bicyclist, in a first detection range 46, and to detect pedestrian or bicyclist kerbside presence by detecting an object 48, typically the pedestrian or bicyclist, in a second detection range 50. From figures 2 and 3, it is appreciated that the radar sensor 26 detects touch-less demand for green light and pedestrian or bicyclist kerbside presence in substantially the same direction 34.

The second detection range 50 is at least partly further from the radar sensor 26 than the first detection range 46. Namely, the first detection range 46 may have a proximal end 52a in the interval of 1 to 5 cm distance from the radar sensor 26, and a distal end 52b in the interval of 6 to 20 cm distance from the radar sensor 26. The detection range could for example be 2 cm to 8 cm. The second detection range 50 may have a proximal end 54a which is equal to the proximal end 52a or the distal end 52b or any point therebetween of the first detection range 46, and a distal end 54b in the interval of 1.5 to 3 m distance from the radar sensor 26. The second detection range could for example be 8 cm to 2.5 m. The first detection range 46 could be referred to as a short range zone (used for touch-less demand), and the second detection range 50 could be referred to a long range zone (used for presence detection).

The radar sensor 26 may have a first measurement service for short range measurement and a second measurement service for long range measurement. In the first measurement service, the radar sensor 26 returns amplitude values corresponding to the signal strength of reflected radar pulses in the first detection range 46, wherein the computer device 24 may be configured to analyse the returned amplitude values to find a peak and to determine that object 44 is detected in the first detection range 46 if the found peak exceeds a predetermined threshold. The predetermined threshold may for example be about 120% of a base level. In the second measurement service, the radar sensor 26 returns a length value (e.g. 157 cm) corresponding to a distance from the radar sensor 26 to the object 48. If the radar sensor 26 does not detect e.g. a person in the second detection range 50, the returned length value is 0. The radar sensor 26 may be configured, or instructed by the computer device 24, to repeatedly switch between the first measurement service for detecting the touch-less demand for green light and the second measurement service for detecting the pedestrian or bicyclist kerbside presence. The measurement services of the radar sensor 26 may for example be switched ten times per second. Sensor/distance data may be streamed continuously (e.g. every 100 ms) to the pedestrian signal application running on the aforementioned micro controller of the computer device 24, where the data may be used as input to the touch-less demand and presence detection functions.

Moving on, the computer device 24 of the present signal device 10 is generally configured to cause the signal device 10 to issue a demand for green light if the radar sensor 26 detects an object 44 in the first detection range 46, and to issue a demand cancellation if the radar sensor stops detecting any object (person) 48 in the second detection range 50. That is, the signal device 10 may issue a demand cancellation (when the signal device 10 is in a (local) demand state and) when no object (person) 48 is detected by the radar sensor 26 in the second detection range 50 anymore. In other words, the computer device 24 of the signal device 10 may be configured to cause the signal device 10 to issue a demand for green light in response to the radar sensor 26 detecting an object 44 in the first detection range 46, and to issue a demand cancellation in response to the radar sensor 26 stopping detecting any object (person) 48 in the second detection range 50.

Specifically, the computer device 24 may cause the signal device 10 to issue a demand for green light if the radar sensor detects the object 44 in the first detection range 46 for a first predetermined time T1, which first predetermined time T1 for example may have a duration in the range of 0.1-1 s. On the other hand, if the radar sensor detects the object 44 in the first detection range 46 for a duration less than the first predetermined time T1, no demand for green light may be issued.

The computer device 24 could also cause the signal device 10 to issue a demand for extended green light, for example if the radar sensor detects the object 44 in the first detection range 46 for a duration >T1, for example 3s ("long touch-less demand"), or if the demand is made by an RFID tag. This could be useful e.g. for impaired persons. When a demand for extended green light is made, the function of issuing a demand cancellation if the radar sensor 26 stops detecting any object 48 in the second detection range 50 could be disabled.

Furthermore, the computer device 24 may cause the signal device 10 to issue the demand cancellation a second predetermined time T2 after the radar sensor 26 stops detecting any object 50 in the second detection range 40, which second predetermined time T2 for example may have a duration in the range of 2-23 s, for example 6 s. The second predetermined time T2 may include a detection timeout period T2a (also referred to a "Detection Filtering Time") and a subsequent notification timeout period T2b (also referred to as "Notification Time"), wherein T2=T2a+T2b, as will be explained further below.

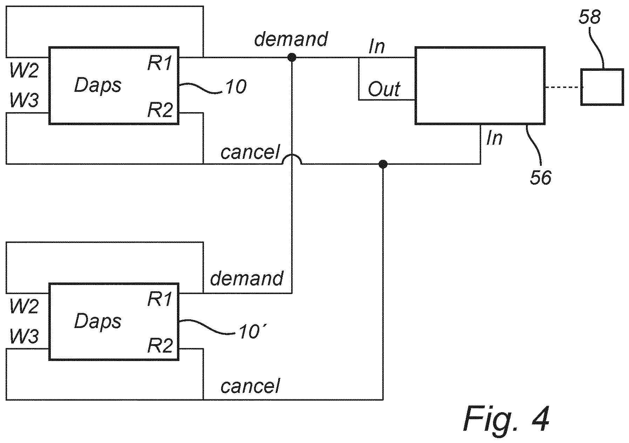

With further reference to fig. 4, the demand for green light and the demand cancellation may be issued from the signal device 10 to a traffic controller device 56, which in turn is adapted to control a traffic light 58 for the pedestrian crossing 12. One unit of the traffic light 58 may be placed on either side of the pedestrian crossing 12, suitably on pole 20, and facing the crossing 12. Another signal device 10' of the same type as the signal device 10 may be positioned on the opposite side of the pedestrian crossing 12. The signal devices 10 and 10' may form a so-called signal group. The signal device 10 (and the signal device 10'), the traffic controller device 56, and the traffic light 58 may form - or form part of - a traffic system.

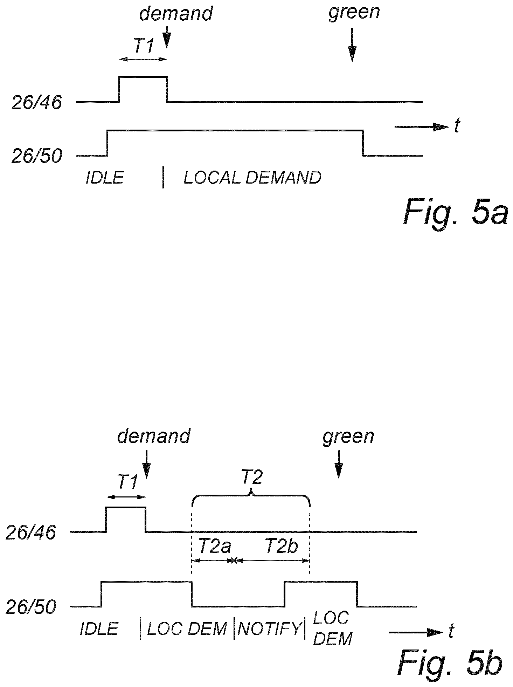

Various use cases of the present signal device 10 will now be discussed, further with reference to figures 5a-d.

In fig. 5a, there is no person at the other signal device 10'. A person arrives at the signal device 10, and the radar sensor 26 detects the presence of the person (object 48) in the second detection range 50, and the person's hand (object 44) in the first detection range 46 for longer than T1, whereby the signal device 10 issues a demand for green light of the traffic light 58 to the traffic controller 56 and the other signal device 10'. In other words, the signal device 10 enters a local demand state (from an idle state), and the signal device 10' enters a remote demand state. The demand may be indicated by turning on the light ring 22a and the front LED 22b (steady light). After some time, the traffic light 58 turns green, and the person crosses the street on the pedestrian crossing 12. The radar sensor 26 of signal device 10 has all the time from demand to green light detected the person (object 48) in the second detection range 50.

In fig. 5b, there is no person at the other signal device 10'. A person arrives at the signal device 10, and the radar sensor 26 detects the presence of the person (object 48) in the second detection range 50, and the person's hand (object 44) in the first detection range 46 for longer than T1, whereby the signal device 10 issues a demand for green light. The demand may be indicated by turning on the light ring 22a and the front LED 22b (steady light). However, before the traffic light 58 turns green, the person moves outside the second detection range 50, which triggers the start of the aforementioned detection timeout period T2a. After the detection timeout period T2a, the signal device 10 enters a notify state, and the computer device 24 activates the pedestrian or bicyclist notification means so as to notify the person that the demand will be cancelled unless he or she re-enters the second detection range 50. The light ring 22a and the front LED 22b may for example emit flashing light, and the loudspeaker 22c may play an information sound and/or a voice message. The person reacts to this and moves back to the second detection range 50 before the notification timeout period T2b is expired, whereby the signal device 10 again enters local demand state, the light ring 22a and front LED 22b go back to steady light, and no demand cancellation is issued. After some time, the traffic light 58 turns green, and the person crosses the street on the pedestrian crossing 12.

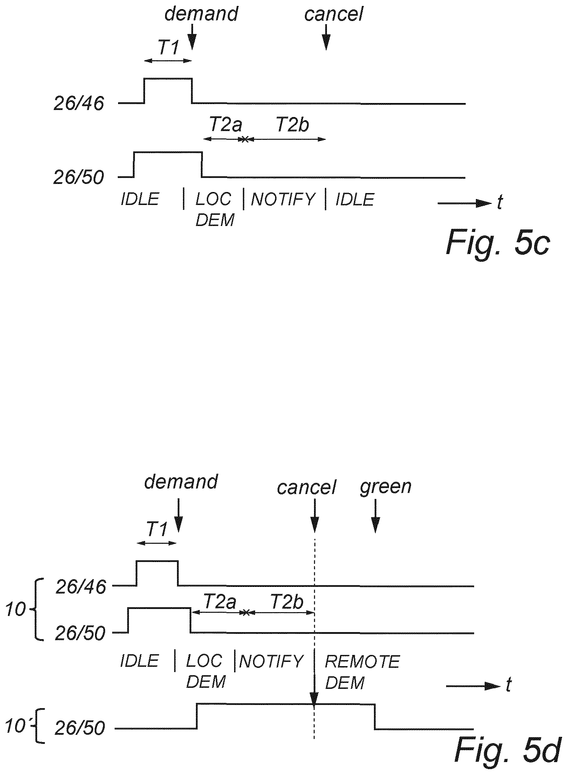

In fig. 5c, there is no person at the other signal device 10'. A person arrives at the signal device 10, and the radar sensor 26 detects the presence of the person (object 48) in the second detection range 50, and the person's hand (object 44) in the first detection range 46 for longer than T1, whereby the signal device 10 issues a demand for green light. However, the person leaves the second detection range 50 and crosses the street when the traffic light 58 is on red. After the second predetermined time T2 (=T2a+T2b), the signal device 10 issues the demand cancellation, the light ring 22a and front LED 22b are turned off, and the signal device 10 enters idle state. The other signal device 10' senses the issued demand cancellation, turns off its light ring and front, and enters idle state. The demand for green light, as well as the subsequent demand cancellation, may be issued to the traffic controller device 56. If the demand for green light is received by the traffic controller device 56 and thereafter the demand cancellation is received from the signal device 10 before the traffic light 58 has turned green, the traffic controller device 56 will not act on the demand for green light preceding the demand cancellation. That is, the traffic light 58 may remain red. A traffic light (not shown) for vehicles passing the crossing 12, which traffic light also may be controlled by the traffic controller device 56, may consequently remain green, or at least not turn red. In this way, unnecessary interruption of the vehicle/car traffic flow may be avoided.

In fig. 5d, there is no person at the other signal device 10'. A person arrives at the signal device 10, and the radar sensor 26 detects the presence of the person (object 48) in the second detection range 50, and the person's hand (object 44) in the first detection range 46 for longer than T1, whereby the signal device 10 issues a demand for green light of the traffic light 58 to the traffic controller 56 and the other signal device 10'. That is, the signal device 10 enters a local demand state (from an idle state), and the signal device 10' enters a remote demand state and turns on its light ring and front LED (steady light). However, the person leaves the second detection range 50 and crosses the street when the traffic light 58 is on red. After the second predetermined time T2 (=T2a+T2b), the signal device 10 issues the demand cancellation, which demand cancellation is sensed by the other signal device 10' on W2 (see fig. 4). However, by that time another person is detected by the other signal device 10' in its second detection range. When the other signal device 10' senses the demand cancellation and at the same time is detecting a person in its second detection range, it enters local demand state and issues a demand, and the light ring and front LED remain on (steady light). The signal device 10 senses the demand issued by the other signal device 10', and enters remote demand state. After some time, the traffic light 58 turns green, and the other person crosses the street on the pedestrian crossing 12.

The radar sensor 26 typically only detects objects that are slightly moving, like a person/pedestrian/bicyclist. Hence, a permanent or stationary object in the first or second detection ranges 46, 50 is typically not detected. The permanent or stationary object could for example be a heap of snow plowed into the second detection range 50, a box used in power grid or mobile phone infrastructure mounted too close to the signal device 10, etc. Should a permanent or stationary object nevertheless be detected in the second detection range 50 even though a person making a demand has left the second detection range 50, this could be handled by learning the background signal signature in idle state of the signal device 10, and take proper action according to that. If this is not possible, the second detection range 50 could be automatically reduced until there is no permanent detection. If this too is not possible, the signal device 10 could issue an error report signal.

Furthermore, if there are multiple persons in the second detection range 50, the radar sensor 26 preferably detects the distance to the closest person.

Returning to fig. 4, the signal device 10 may comprise a first relay output R1 and a second relay output R2. In fig. 4, the demand for green light is issued on the first relay output R1, and the demand cancellation is issued on the second relay output R2.

At least one of the first and second relay outputs R1, R2 (for example the first relay output R1) may be enabled for issuing the demand for green light and the demand cancellation solely when the traffic light 58 associated with the signal device 10 is on red light, whereas at least one of the first and second relay outputs R1, R2 (for example the second relay output R2) may be enabled for issuing an error report signal solely when the traffic light 58 is on green light.

Furthermore, the demand for green light and the demand cancellation could be issued on the same relay output, like the first relay output R1. To this end, the demand for green light and the demand cancellation may have different pulse lengths, if the signal device 10 is in a pulse signalling mode. Alternatively, the demand for green light may be signalled by an active relay output (e.g. R1) and the demand cancellation may be signalled by an inactive relay output (R1) if the signal device is in a level signalling mode. An active relay output could be that a voltage is output (relay is closed), and an inactive relay output could be that no voltage is output (relay is open), or vice versa (inverted logic).

By means of the above, it is appreciated that demand/cancellation could be configured to output relay R1/R1, R1/R2 (fig. 4), R2/R1, or R2/R2. It is also appreciated that all functions could use the same output relay, for example the first output relay R1.

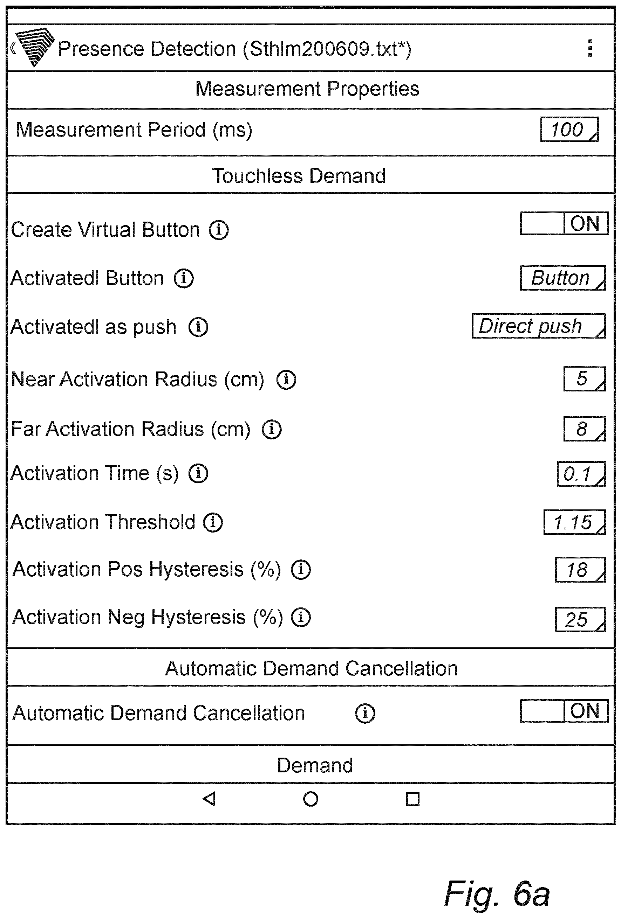

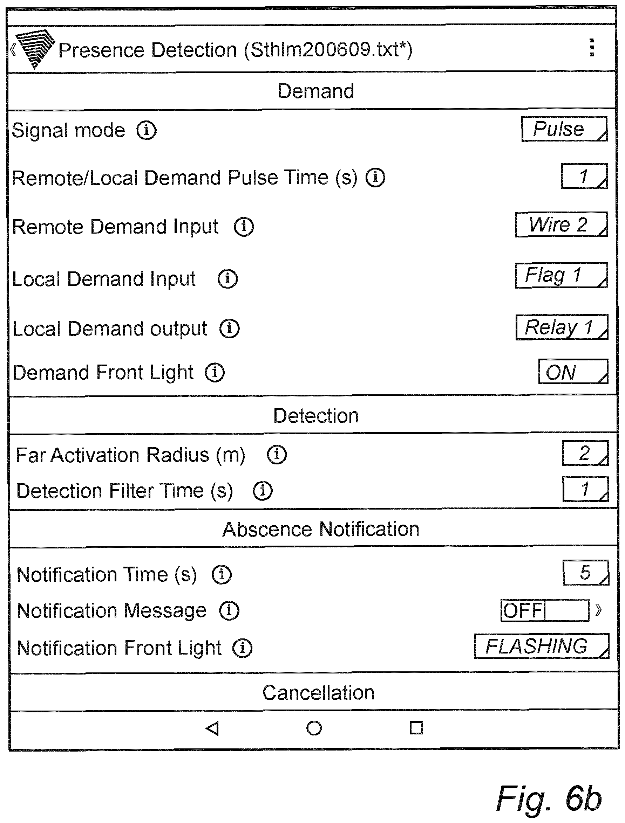

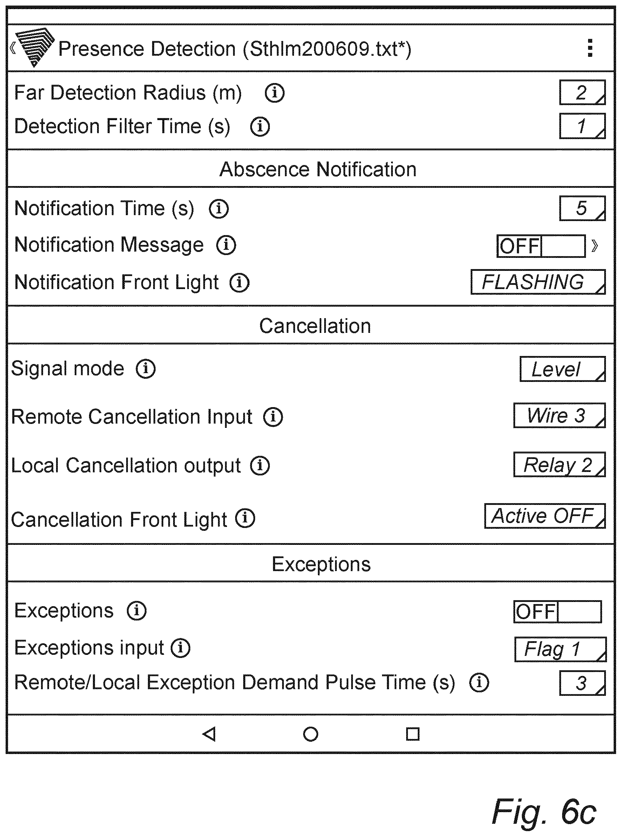

Figures 6a-c are screen shots of an app that may be used to configure the present signal device 10. The app may run on a mobile computing device such as a smart phone. Configuration parameters set in the app could be downloaded to the signal device 10 for example via NFC or a USB memory, and be stored in a non-volatile memory of the signal device 10.

The person skilled in the art realizes that the present invention by no means is limited to the embodiments described above. On the contrary, many modifications and variations are possible within the scope of the appended claims. For example, the demand for green light and the demand cancellation (and the error report signal) could be issued in other ways than using one or more relay outputs R1, R2, for example wirelessly and/or via data communication. In particular, the demand for green light and the demand cancellation could be issued using wireless data communication (for example a mesh network). The demand for green light and the demand cancellation could also be issued using wired data communication (for example Ethernet, CAN bus, etc.).

Furthermore, the signal device could include a first radar sensor for detecting touch-less demand for green in one direction (e.g. "straight forward"), and a second radar sensor for detecting pedestrian or bicyclist kerbside presence in a different direction (for example "left" or "right"). Hence there is envisaged a signal device for a pedestrian or bicycle crossing, the signal device comprising: a computer device; a first radar sensor connected to the computer device and adapted to detect touch-less demand for green light in a first direction (by detecting an object in a first detection range); and a second radar sensor connected to the computer device and adapted to detect pedestrian or bicyclist kerbside presence in a second direction different than the first direction (by detecting an object in a second detection range), wherein the computer device is configured to cause the signal device to issue a demand for green light if the first radar sensor detects a touch-less demand (i.e. detects an object in the first detection range), and to issue a demand cancellation if the second radar sensor stops detecting pedestrian or bicyclist kerbside presence (i.e. stops detecting any object in the second detection range). This signal device may exhibit at least some same or similar features and technical effects as the signal device 10. For example, the computer device of this signal device may further be configured to cause the signal device to issue the demand cancellation a predetermined time T2 after the second radar sensor stops detecting pedestrian or bicyclist kerbside presence (i.e. stops detecting any object in the second detection range). This signal device may further comprises pedestrian or bicyclist notification means, wherein the predetermined time T2 includes a detection timeout period and a subsequent notification timeout period, and wherein the computer device is configured to activate the pedestrian or bicyclist notification means during the notification timeout period after the detection timeout period (so as to notify a pedestrian or bicyclist that a demand will be cancelled unless the pedestrian or bicyclist re-enters the second detection range).

**Claims**

1. A signal device (10) for a pedestrian or bicycle crossing (12), the signal device comprising:

    a computer device (24); and
    a single radar sensor (26) connected to the computer device and adapted to detect touch-less demand for green light by detecting an object (44) being a hand of a pedestrian or bicyclist in a first detection range (46) and to detect pedestrian or bicyclist kerbside presence by detecting an object (48) being the pedestrian or bicyclist in a second detection range (50), the second detection range being at least partly further from the radar sensor than the first detection range, wherein a permanent or stationary object in the first or second detection ranges (46, 50) is not detected,
    wherein the first detection range has a proximal end (52a) in the interval of 1 to 5 cm distance from the radar sensor and a distal end (52b) in the interval of 6 to 20 cm distance from the radar sensor, and wherein the second detection range has a proximal end (54a) which is equal to the proximal end (52a) or the distal end (52b) or any point therebetween of the first detection range (46) and has a distal end (54b) in the interval of 1.5 to 3 m distance from the radar sensor,
    wherein the radar sensor is adapted to detect touch-less demand for green light and pedestrian or bicyclist kerbside presence in substantially the same direction (34),
    wherein the radar sensor is aimed in a substantially horizontal direction substantially parallel to the kerb at the pedestrian or bicycle crossing,
    wherein the computer device is configured to cause the signal device to issue a demand for green light if the radar sensor detects an object in the first detection range, and to issue a demand cancellation if the radar sensor stops detecting any object in the second detection range,
    wherein the computer device is configured to cause the signal device to issue a demand for green light if the radar sensor detects the hand of the pedestrian or bicyclist in the first detection range for a first predetermined time (T1), and
    wherein the computer device is configured to cause the signal device to issue the demand cancellation a second predetermined time (T2) after the radar sensor stops detecting any object in the second detection range.

2. A signal device according to claim 1, wherein the radar sensor has a first measurement service for short range measurement and a second measurement service for long range measurement, and wherein the radar sensor is configured, or instructed by the computer device, to repeatedly switch between the first measurement service for detecting the touch-less demand for green light and the second measurement service for detecting the pedestrian or bicyclist kerbside presence.

3. A signal device according to any one of the preceding claims, wherein the first predetermined time (T1) has a duration set in the range of 0.1-1 s.

4. A signal device according to any one of the preceding claims, wherein the second predetermined time (T2) has a duration set in the range of 2-23 s.

5. A signal device according to claim 1, further comprising pedestrian or bicyclist notification means (22a; 22b), wherein the second predetermined time includes a detection timeout period and a subsequent notification timeout period, and wherein the computer device is configured to activate the pedestrian or bicyclist notification means during the notification timeout period after the detection timeout period so as to notify a pedestrian or bicyclist that a demand will be cancelled unless the pedestrian or bicyclist re-enters the second detection range.

**6.** A signal device according to any one of the preceding claims, further comprising a first relay output and a second relay output, wherein at least one of the first and second relay outputs is enabled for issuing the demand for green light and the demand cancellation solely when a traffic light associated with the signal device is on red light, and wherein at least one of the first and second relay outputs is enabled for issuing an error report signal solely when the traffic light associated with the signal device is on green light.

**7.** A signal device according to any one of the preceding claims, wherein the demand for green light and the demand cancellation have different pulse lengths if the signal device is in a pulse signalling mode, and wherein the demand for green light is signalled by an active relay output of the signal device and the demand cancellation is signalled by an inactive relay output of the signal device if the signal device is in a level signalling mode.

**8.** A signal device according to any one of the preceding claims, wherein the radar sensor is a pulsed radar sensor adapted to detect a distance to an object (44; 48) in front of the pulsed radar sensor based on time of flight.

**9.** A signal device according to any one of the preceding claims, wherein the radar sensor comprises one transmitter antenna (28) and one receiver antenna (30).

**10.** A signal device according to any one of the preceding claims, further comprising a housing with the computer device and the radar sensor.

**11.** A signal device according to claim 10, wherein the radar sensor is mounted to a sensor ring or plate arranged between an upper part (14; 22a) of the housing and a lower part (16) of the housing.

**12.** A signal device according to any one of the preceding claims, wherein the signal device is adapted to issue the demand for green light and the demand cancellation using wireless data communication or wired data communication.

**13.** A traffic system, comprising:

a traffic light (58) for a pedestrian or bicycle crossing (12);
a traffic controller device (56) adapted to control the traffic light; and
at least one signal device (10; 10') according to any one of the claims 1 to 11 or according to claim 12 mounted on a pole (20) and connected to the traffic controller device and adapted to issue the demand for green light of the traffic light and the demand cancellation to said traffic controller device.

**14.** A method, comprising:

providing a signal device (10) according to any one of the claims 1 to 11 or according to claim 12 at a pedestrian or bicycle crossing (12);
detecting touch-less demand for green light by detecting an object (44) in the first detection range (46) using the radar sensor (26) of the signal device;
detecting pedestrian or bicyclist kerbside presence by detecting an object (48) in the second detection range (50) using said radar sensor (26);
the signal device issuing a demand for green light if the radar sensor detects an object in the first detection range; and
the signal device issuing a demand cancellation if the radar sensor stops detecting any object in the second detection range.

**Patentansprüche**

**1.** Signalvorrichtung (10) für einen Fußgänger- und Fahrradübergang (12), die Folgendes umfasst:

eine Computervorrichtung (24) und
einen einzelnen Radarsensor (26), der mit der Computervorrichtung verbunden und so ausgelegt ist, dass er ohne Berührung Bedarf für grünes Licht erkennt, indem er in einem ersten Erkennungsbereich (46) ein Objekt (44) erkennt, bei dem es sich um eine Hand eines Fußgängers oder Fahrradfahrers handelt, und die Anwesenheit eines Fußgängers oder Fahrradfahrers am Straßenrand erkennt, indem er in einem zweiten Erkennungsbereich (50) ein Objekt (48) erkennt, bei dem es sich um den Fußgänger oder Fahrradfahrer handelt, wobei der zweite Erkennungsbereich zumindest teilweise weiter von dem Radarsensor weg geht als der erste Erkennungsbereich, wobei ein dauerhaftes oder unbewegliches Objekt im ersten oder zweiten Erkennungsbereich (46, 50) nicht erkannt wird,

wobei der erste Erkennungsbereich im Abstand von 1 bis 5 cm zum Radarsensor ein proximales Ende (52a) und im Abstand von 6 bis 20 cm zum Radarsensor ein distales Ende (52b) und der zweite Erkennungsbereich ein dem proximalen Ende (52a) oder dem distalen Ende (52b) oder einem beliebigen dazwischenliegenden Punkt des ersten Erkennungsbereichs (46) entsprechendes proximales Ende (54a) und im Abstand von 1,5 bis 3 m zum Radarsensor ein distales Ende (54b) aufweist,

wobei der Radarsensor so ausgelegt ist, dass er in im Wesentlichen der gleichen Richtung (34) ohne Berührung Bedarf für grünes Licht und eine Anwesenheit eines Fußgängers oder Fahrradfahrers am Straßenrand erkennt, wobei der Radarsensor in eine im Wesentlichen horizontale Richtung im Wesentlichen parallel zum Straßenrand an dem Fußgänger- und Fahrradübergang gerichtet ist,

wobei die Computervorrichtung so konfiguriert ist, dass sie die Signalvorrichtung veranlasst, einen Bedarf für grünes Licht auszugeben, wenn der Radarsensor in dem ersten Erkennungsbereich ein Objekt erkennt, und eine Stornierung des Bedarfs auszugeben, wenn der Radarsensor in dem zweiten Erkennungsbereich kein Objekt mehr erkennt,

wobei die Computervorrichtung so konfiguriert ist, dass sie die Signalvorrichtung veranlasst, einen Bedarf für grünes Licht auszugeben, wenn der Radarsensor in dem ersten Erkennungsbereich für einen ersten vorgegebenen Zeitraum (T1) die Hand des Fußgängers oder Fahrradfahrers erkennt, und

wobei die Computervorrichtung so konfiguriert ist, dass sie die Signalvorrichtung veranlasst, die Stornierung des Bedarfs nach einem zweiten vorgegebenen Zeitraum (T2) auszugeben, wenn der Radarsensor in dem zweiten Erkennungsbereich kein Objekt mehr erkennt.

2. Signalvorrichtung nach Anspruch 1, wobei der Radarsensor einen ersten Messdienst für eine Nahbereichsmessung und einen zweiten Messdienst für eine Fernbereichsmessung aufweist und so konfiguriert ist oder von der Computervorrichtung angewiesen wird, dass er wiederholt zwischen dem ersten Messdienst zum Erkennen des Bedarfs für grünes Licht ohne Berührung und dem zweiten Messdienst zum Erkennen der Anwesenheit eines Fußgängers oder Fahrradfahrers am Straßenrand wechselt.

3. Signalvorrichtung nach einem der vorhergehenden Ansprüche, wobei der erste vorgegebene Zeitraum (T1) auf eine Dauer eingestellt ist, die im Bereich von 0,1 bis 1 s liegt.

4. Signalvorrichtung nach einem der vorhergehenden Ansprüche, wobei der zweite vorgegebene Zeitraum (T2) auf eine Dauer eingestellt ist, die im Bereich von 2 bis 23 s liegt.

5. Signalvorrichtung nach Anspruch 1, die ferner Fußgänger- oder Fahrradfahrerbenachrichtigungsmittel (22a; 22b) umfasst, wobei der zweite vorgegebene Zeitraum eine Erkennungsabbruchfrist und eine darauf folgende Benachrichtigungsabbruchfrist umfasst und die Computervorrichtung so konfiguriert ist, dass sie die Fußgänger- oder Fahrradfahrerbenachrichtigungsmittel in der Benachrichtigungsabbruchfrist nach der Erkennungsabbruchfrist aktiviert, um einen Fußgänger oder Fahrradfahrer zu benachrichtigen, dass ein Bedarf storniert wird, es sei denn, der Fußgänger oder Fahrradfahrer bewegt sich wieder in den zweiten Erkennungsbereich.

6. Signalvorrichtung nach einem der vorhergehenden Ansprüche, die ferner einen ersten und einen zweiten Relaisausgang umfasst, wobei der erste oder/und der zweite Relaisausgang nur dann in der Lage ist, den Bedarf für grünes Licht und die Stornierung des Bedarfs auszugeben, wenn eine zur Signalvorrichtung gehörende Verkehrsampel auf Rot steht, und der erste oder/und der zweite Relaisausgang nur dann in der Lage ist, ein Fehlerberichtsignal auszugeben, wenn die zu der Signalvorrichtung gehörende Verkehrsampel auf Grün steht.

7. Signalvorrichtung nach einem der vorhergehenden Ansprüche, wobei der Bedarf für grünes Licht und die Stornierung des Bedarfs, wenn sich die Signalvorrichtung in einem Impulssignalmodus befindet, unterschiedliche Impulslängen aufweisen und, wenn sich die Signalvorrichtung in einem Pegelsignalmodus befindet, der Bedarf für grünes Licht durch einen aktiven Relaisausgang der Signalvorrichtung und die Stornierung des Bedarfs durch einen inaktiven Relaisausgang der Signalvorrichtung signalisiert wird.

8. Signalvorrichtung nach einem der vorhergehenden Ansprüche, wobei es sich bei dem Radarsensor um einen gepulsten Radarsensor handelt, der so ausgelegt ist, dass er auf der Grundlage der Laufzeit einen Abstand zu einem vor ihm befindlichen Objekt (44; 48) erkennt.

9. Signalvorrichtung nach einem der vorhergehenden Ansprüche, wobei der Radarsensor eine Sendeantenne (28) und eine Empfangsantenne (30) umfasst.

10. Signalvorrichtung nach einem der vorhergehenden Ansprüche, die ferner ein Gehäuse mit der Computervorrichtung und dem Radarsensor umfasst.

11. Signalvorrichtung nach Anspruch 10, wobei der Radarsensor an einem Sensorring oder einer Sensorplatte angebracht ist, der/die zwischen einem oberen Teil (14; 22a) des Gehäuses und einem unteren Teil (16) des Gehäuses angeordnet ist.

12. Signalvorrichtung nach einem der vorhergehenden Ansprüche, wobei die Signalvorrichtung so ausgelegt ist, dass sie mithilfe von drahtlosem oder drahtgebundenem Datenaustausch den Bedarf für grünes Licht und die Stornierung des Bedarfs ausgibt.

13. Verkehrssystem, das Folgendes umfasst:

eine Verkehrsampel (58) für einen Fußgänger- oder Fahrradübergang (12),
eine Verkehrsleitvorrichtung (56), die so ausgelegt ist, dass sie die Verkehrsampel regelt, und
mindestens eine Signalvorrichtung (10; 10') nach einem der Ansprüche 1 bis 11 oder nach Anspruch 12, die an einem Mast (20) angebracht und mit der Verkehrsleitvorrichtung verbunden und so ausgelegt ist, dass sie den Bedarf für grünes Licht und die Stornierung des Bedarfs an die Verkehrsleitvorrichtung ausgibt.

14. Verfahren, das Folgendes umfasst:

Bereitstellen einer Signalvorrichtung (10) nach einem der Ansprüche 1 bis 11 oder nach Anspruch 12 an einem Fußgänger- oder Fahrradübergang (12),
Erkennen eines Bedarfs für grünes Licht ohne Berührung durch Erkennen eines Objekts (44) im ersten Erkennungsbereich (46) mithilfe des Radarsensors (26) der Signalvorrichtung,
Erkennen der Anwesenheit eines Fußgängers oder Fahrradfahrers am Straßenrand durch Erkennen eines Objekts (48) im zweiten Erkennungsbereich (50) mithilfe des Radarsensors (26),
Ausgeben eines Bedarfs für grünes Licht durch die Signalvorrichtung, wenn der Radarsensor im ersten Erkennungsbereich ein Objekt erkennt, und
Ausgeben einer Stornierung des Bedarfs durch die Signalvorrichtung, wenn der Radarsensor im zweiten Erkennungsbereich kein Objekt mehr erkennt.

**Revendications**

1. Dispositif de signalisation (10) d'un passage pour piétons ou cyclistes (12), le dispositif de signalisation comprenant :

un dispositif informatique (24) ; et
un capteur radar unique (26) connecté au dispositif informatique et adapté pour détecter une demande de feu vert sans contact par détection d'un objet (44) consistant en une main d'un piéton ou cycliste dans une première plage de détection (46) et pour détecter la présence d'un piéton ou cycliste sur une bordure de trottoir par détection d'un objet (48) consistant dans le piéton ou cycliste dans une deuxième plage de détection (50), la deuxième plage de détection étant au moins partiellement plus éloignée du capteur radar que la première plage de détection, dans lequel un objet permanent ou immobile dans les première ou deuxième plages de détection (46, 50) n'est pas détecté,
dans lequel la première plage de détection présente une extrémité proximale (52a) dans l'intervalle de 1 à 5 cm de distance par rapport au capteur radar et une extrémité distale (52b) dans l'intervalle de 6 à 20 cm de distance par rapport au capteur radar, et dans lequel la deuxième plage de détection présente une extrémité proximale (54a) égale à l'extrémité proximale (52a) ou à l'extrémité distale (52b) ou à n'importe quel point intermédiaire de la première plage de détection (46) et présente une extrémité distale (54b) dans l'intervalle de 1,5 à 3 m de distance par rapport au capteur radar,
dans lequel le capteur radar est adapté pour détecter une demande de feu vert sans contact et la présence d'un piéton ou cycliste sur une bordure de trottoir substantiellement dans la même direction (34), dans lequel le capteur radar est orienté dans une direction substantiellement horizontale, substantiellement parallèle au trottoir, au niveau du passage pour piétons ou cyclistes,

dans lequel le dispositif informatique est configuré pour amener le dispositif de signalisation à émettre une demande de feu vert si le capteur radar détecte un objet dans la première plage de détection, et à émettre une annulation de demande si le capteur radar arrête la détection de tout objet dans la deuxième plage de détection,

dans lequel le dispositif informatique est configuré pour amener le dispositif de signalisation à émettre une demande de feu vert si le capteur radar détecte la main du piéton ou cycliste dans la première plage de détection pour un premier temps prédéterminé (T1), et

dans lequel le dispositif informatique est configuré pour amener le dispositif de signalisation à émettre l'annulation de demande à un deuxième temps prédéterminé (T2) après l'arrêt de la détection de tout objet par le capteur radar dans la deuxième plage de détection.

2. Dispositif de signalisation selon la revendication 1, dans lequel le capteur radar fournit un premier service de mesure pour une mesure de courte distance et un deuxième service de mesure pour une mesure de longue distance, et dans lequel le capteur radar est configuré pour, ou invité par le dispositif informatique à commuter, de façon répétée, entre le premier service de mesure pour la détection de la demande de feu vert sans contact et le deuxième service de mesure pour la détection de la présence d'un piéton ou cycliste sur une bordure de trottoir.

3. Dispositif de signalisation selon l'une quelconque des revendications précédentes, dans lequel le premier temps prédéterminé (T1) a une durée fixée dans la plage de 0,1 à 1 s.

4. Dispositif de signalisation selon l'une quelconque des revendications précédentes, dans lequel le deuxième temps prédéterminé (T2) a une durée fixée dans la plage de 2 à 23 s.

5. Dispositif de signalisation selon la revendication 1, comprenant en outre un moyen de notification de piéton ou cycliste (22a ; 22b), dans lequel le deuxième temps prédéterminé inclut une période de temporisation de détection et une période de temporisation de notification consécutive, et dans lequel le dispositif informatique est configuré pour activer le moyen de notification de piéton ou cycliste pendant la période de temporisation de notification après la période de temporisation de détection, de manière à notifier un piéton ou cycliste qu'une demande sera annulée, à moins que le piéton ou cycliste rentre de nouveau dans la deuxième plage de détection.

6. Dispositif de signalisation selon l'une quelconque des revendications précédentes, comprenant en outre une première sortie de relais et une deuxième sortie de relais, dans lequel l'une au moins parmi les première et deuxième sorties de relais est activée pour émettre la demande de feu vert et l'annulation de demande uniquement lorsqu'un feu de circulation associé au dispositif de signalisation est rouge, et dans lequel l'une au moins parmi les première et deuxième sorties de relais est activée pour émettre un signal de rapport d'erreur uniquement lorsque le feu de circulation associé au dispositif de signalisation est vert.

7. Dispositif de signalisation selon l'une quelconque des revendications précédentes, dans lequel la demande de feu vert et l'annulation de demande ont des longueurs d'impulsion différentes si le dispositif de signalisation est dans un mode de signalisation à impulsions, et dans lequel la demande de feu vert est signalisée par une sortie de relais active du dispositif de signalisation et l'annulation de demande est signalisée par une sortie de relais inactive du dispositif de signalisation si le dispositif de signalisation est dans un mode de signalisation à niveaux.

8. Dispositif de signalisation selon l'une quelconque des revendications précédentes, dans lequel le capteur radar est un capteur radar pulsé adapté pour détecter une distance par rapport à un objet (44 ; 48) situé devant le capteur radar pulsé sur la base du temps de propagation.

9. Dispositif de signalisation selon l'une quelconque des revendications précédentes, dans lequel le capteur radar comprend une antenne d'émission (28) et une antenne de réception (30).

10. Dispositif de signalisation selon l'une quelconque des revendications précédentes, comprenant en outre un boîtier avec le dispositif informatique et le capteur radar.

11. Dispositif de signalisation selon la revendication 10, dans lequel le capteur radar est monté sur un anneau ou une plaque de capteur disposé(e) entre une partie supérieure (14 ; 22a) du boîtier et une partie inférieure (16) du boîtier.

12. Dispositif de signalisation selon l'une quelconque des revendications précédentes, dans lequel le dispositif de signalisation est adapté pour émettre la demande de feu vert et l'annulation de demande à l'aide d'une communication de données sans fil ou d'une communication de données filaire.

**13.** Système de circulation, comprenant :

un feu de circulation (58) pour un passage pour piétons ou cyclistes (12) ;
un dispositif de commande de circulation (56) adapté pour commander le feu de circulation ; et
au moins un dispositif de signalisation (10 ; 10') selon l'une quelconque des revendications 1 à 11 ou selon la revendication 12, monté sur un poteau (20) et connecté au dispositif de commande de circulation et adapté pour envoyer la demande de feu vert du feu de circulation et l'annulation de demande audit dispositif de commande de circulation.

**14.** Procédé comprenant :

la mise à disposition d'un dispositif de signalisation (10) selon l'une quelconque des revendications 1 à 11 ou selon la revendication 12, au niveau d'un passage pour piétons ou cyclistes (12) ;
la détection d'une demande de feu vert sans contact par détection d'un objet (44) dans la première plage de détection (46) à l'aide du capteur radar (26) du dispositif de signalisation ;
la détection de la présence d'un piéton ou cycliste sur une bordure de trottoir par détection d'un objet (48) dans la deuxième plage de détection (50) à l'aide dudit capteur radar (26) ;
l'émission d'une demande de feu vert par le dispositif de signalisation si le capteur radar détecte un objet dans la première plage de détection ; et
l'émission d'une annulation de demande par le dispositif de signalisation si le capteur radar arrête la détection de tout objet dans la deuxième plage de détection.

Fig. 1

Fig. 2

Fig. 3

Fig. 4

demand

green

T1

26/46

t

26/50

IDLE | LOCAL DEMAND

Fig. 5a

demand

green

T1

T2

T2a  T2b

26/46

26/50

IDLE | LOC DEM | NOTIFY | LOC DEM

t

Fig. 5b

demand    cancel

$T1$

26/46

$T2a$   $T2b$

26/50

IDLE  | LOC |NOTIFY | IDLE              $t$
DEM

*Fig. 5c*

demand    cancel   green

$T1$

26/46

10

$T2a$  $T2b$

26/50

IDLE  | LOC |NOTIFY | REMOTE
DEM         DEM           $t$

10'  26/50

*Fig. 5d*

《 Presence Detection (Sthlm200609.txt*)                              ⋮

## Measurement Properties

| Measurement Period (ms) | 100 |
|---|---|

## Touchless Demand

| | |
|---|---|
| Create Virtual Button ⓘ | ON |
| Activatedl Button ⓘ | Button |
| Activatedl as push ⓘ | Direct push |
| Near Activation Radius (cm) ⓘ | 5 |
| Far Activation Radius (cm) ⓘ | 8 |
| Activation Time (s) ⓘ | 0.1 |
| Activation Threshold ⓘ | 1.15 |
| Activation Pos Hysteresis (%) ⓘ | 18 |
| Activation Neg Hysteresis (%) ⓘ | 25 |

## Automatic Demand Cancellation

| Automatic Demand Cancellation      ⓘ | ON |
|---|---|

## Demand

◁          ◯          ▢

*Fig. 6a*

| Presence Detection (Sthlm200609.txt*) | ⋮ |
|---|---|

**Demand**

| Signal mode ⓘ | Pulse |
|---|---|
| Remote/Local Demand Pulse Time (s) ⓘ | 1 |
| Remote Demand Input ⓘ | Wire 2 |
| Local Demand Input ⓘ | Flag 1 |
| Local Demand output ⓘ | Relay 1 |
| Demand Front Light ⓘ | ON |

**Detection**

| Far Activation Radius (m) ⓘ | 2 |
|---|---|
| Detection Filter Time (s) ⓘ | 1 |

**Absence Notification**

| Notification Time (s) ⓘ | 5 |
|---|---|
| Notification Message ⓘ | OFF » |
| Notification Front Light ⓘ | FLASHING |

**Cancellation**

◁    ○    ▢

*Fig. 6b*

« ☰ Presence Detection (Sthlm200609.txt*)     ⋮

| Far Detection Radius (m)  ⓘ | | 2 |
| Detection Filter Time (s)  ⓘ | | 1 |

### Abscence Notification

| Notification Time (s)  ⓘ | | 5 |
| Notification Message  ⓘ | OFF | » |
| Notification Front Light  ⓘ | | *FLASHING* |

### Cancellation

| Signal mode  ⓘ | | *Level* |
| Remote Cancellation Input  ⓘ | | *Wire 3* |
| Local Cancellation output  ⓘ | | *Relay 2* |
| Cancellation Front Light  ⓘ | | *Active OFF* |

### Exceptions

| Exceptions  ⓘ | | OFF |
| Exceptions input  ⓘ | | *Flag 1* |
| Remote/Local Exception Demand Pulse Time (s)  ⓘ | | 3 |

◁     ◯     ▢

*Fig. 6c*

**EP 3 933 800 B1**

**Patent documents cited in the description**

- GB 2561653 A

**Non-patent literature cited in the description**

- Traffic Detector Handbook. 01 October 2006, vol. I